**Europäisches Patentamt**

**European Patent Office**

**Office européen des brevets**

(19)

(11) Numéro de publication: **0 120 768**
**A1**

## (12) DEMANDE DE BREVET EUROPEEN

(21) Numéro de dépôt: **84400544.7**

(22) Date de dépôt: **16.03.84**

(51) Int. Cl.³: **G 11 B 15/66**

(30) Priorité: **25.03.83 FR 8304985**

(43) Date de publication de la demande:
**03.10.84 Bulletin 84/40**

(84) Etats contractants désignés:
**DE FR GB IT NL**

(71) Demandeur: **SOCIETE D'ELECTRONIQUE INDUSTRIELLE DE MOULINS SELIMO**
**173, boulevard Haussmann**
**F-75008 Paris(FR)**

(72) Inventeur: **Billon, Jean-Pierre**
**THOMSON-CSF SCPI 173, bld Haussmann**
**F-75379 Paris Cedex 08(FR)**

(74) Mandataire: **Grynwald, Albert et al,**
**THOMSON-CSF SCPI 173, Bld Haussmann**
**F-75379 Paris Cedex 08(FR)**

(54) **Panneau à ouverture fermée par une plaque, notamment porte d'accès au réceptacle d'un lecteur-enregistreur de bandes magnétiques en cassettes.**

(57) La partie (14') dudit panneau bordant un premier côté (12) de l'ouverture (11) présente une élasticité telle que ce côté (12) puisse, sous l'effet d'une traction (F) su ladite partie, être courbé avec sa concavité tournée vers l'ouverture. Ce côté (12) est bordé par un épaulement (22), ou une rainure, en retrait par rapport à la façade (21) et qui est destiné à coopérer, pour la fixation de la plaque quand la traction a été relachée, avec une face d'une nervure en saillie d'un premier côté de la plaque.

FIG_1.

EP 0 120 768 A1

1

## PANNEAU A OUVERTURE FERMEE PAR UNE PLAQUE, NOTAMMENT PORTE D'ACCES AU RECEPTACLE D'UN LECTEUR-ENREGISTREUR DE BANDES MAGNETIQUES EN CASSETTES

L'invention est relative à un panneau présentant une ouverture fermée par une plaque, notamment une porte de lecteur-enregistreur de bandes magnétiques en cassettes à plaque transparente d'observation de la cassette.

Dans les lecteurs et/ou enregistreurs de bandes magnétiques en cassettes celles-ci sont introduites dans un réceptacle du fond duquel sont en saillie deux arbres d'entrainement des bobines de cassette et dans lequel se trouve la tête de lecture et/ou enregistrement et/ou effacement. Ce réceptacle est fermé par une porte généralement opaque avec une partie transparente permettant l'observation des arbres et de l'état de remplissage de chacune des bobines. Le plus souvent la fenêtre transparente est une plaque fermant une ouverture du panneau.

L'assemblage de la plaque transparente à la porte est effectué à l'aide de moyens de fixation à éléments rapportés tels que vis, rivets, ruban adhésif, etc... ou par collage. Une telle fixation n'est pas favorable à la fabrication en grande série. De plus les moyens de fixation sont parfois inesthétiques.

L'invention remédie à ces inconvénients.

Elle est caractérisée en ce qu'une partie du panneau bordant un côté de l'ouverture est élastique de manière que ce côté puisse être courbé avec sa concavité tournée vers l'ouverture, et en ce que ce côté est bordé par un épaulement, ou une rainure, en retrait par rapport à la façade et coopérant, pour la fixation de la plaque au panneau, avec une face d'une nervure en saillie de la tranche du côté correspondant de la plaque.

Ainsi pour fixer la plaque au panneau on courbe, en profitant de l'élasticité, un côté de l'ouverture, ce qui agrandit cette ouverture et permet d'y installer la plaque, avec sa nervure à proximité de l'épaulement ou de la rainure. Lorsque la tension ou traction sur le panneau est relachée l'épaulement ou la rainure coopère avec la nervure de la plaque pour assurer la fixation de cette plaque au panneau. On a donc affaire à une fixation par enclenchement, ou clipsage, sans élément rapporté.

Dans le mode de réalisation préféré de l'invention la nervure de la tranche de la plaque présente une arête libre non rectiligne, sa hauteur la plus importante étant dans la partie centrale. De préférence la courbure de cette arête de la nervure de la plaque correspond à la courbure du côté de l'ouverture du panneau lorsque ladite partie élastique est sous tension.

Le positionnement de la plaque par rapport au panneau peut être facilité en prévoyant sur le côté de l'ouverture opposé à celui qui peut être courbé un autre épaulement, ou rainure, en retrait de la façade, limité par les côtés adjacents de l'ouverture et destiné à recevoir une nervure en saillie de la tranche du côté correspondant de la plaque et d'une longueur légèrement inférieure à celle du côté de l'ouverture avec lequel il coopère.

D'autres caractéristiques et avantages de l'invention apparaîtront avec la description de l'un de ses modes de réalisation, celle-ci étant effectuée en se référant aux dessins ci-annexés sur lesquels :

- la figure 1 est un schéma en perspective de la porte de fermeture d'un réceptacle de cassette, juste avant le montage de la plaque transparente,

- la figure 2 est une vue correspondant à une coupe selon la ligne 2-2 de la figure 1 après montage de la plaque transparente,

- la figure 3 est une vue en perspective de la plaque transparente, et

- la figure 4 est une vue suivant la flèche f de la figure 3.

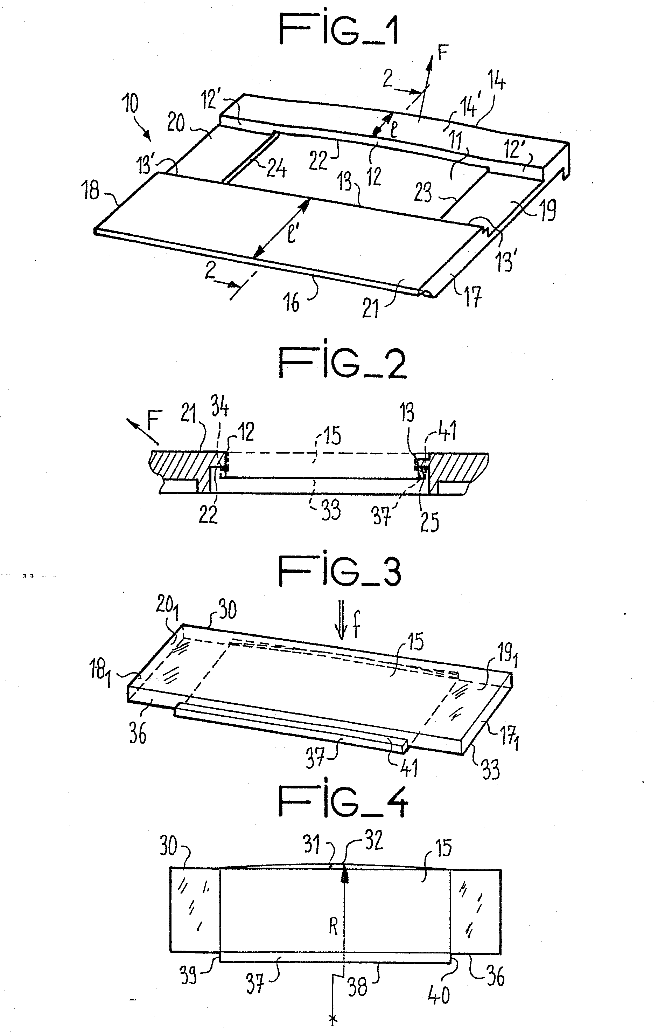

La porte 10, constituant un panneau de fermeture d'un réceptacle de lecteur-enregistreur de cassettes qui est représentée sur la figure 1 a la forme générale d'un rectangle. Elle est en matière

3

plastique avec une ouverture 11 de forme rectangulaire allongée.

Les grandes côtés 12, 13 de l'ouverture 11 sont parallèles aux grands côtés 14, 16 du panneau 10. Le grand côté 12 de l'ouverture 11 est séparé du grand côté adjacent 14 du panneau 10 par une distance l telle que la partie 14' de ce panneau disposée entre ces côtés 12 et 14 forme une bande présentant une légère élasticité dans une direction perpendiculaire à ces côtés 12 et 14, dans le plan du panneau. Cette bande 14' présente également de l'élasticité perpendiculairement au plan du panneau 10. Ainsi si une traction oblique (avec une composante dans le plan du panneau, perpendiculaire au côté 12, et une composante perpendiculaire au plan du panneau), représentée par la flèche F sur la figure 1, est exercée sur cette bande à l'opposé de l'ouverture le côté 12 se courbe avec un rayon de courbure R, ce qui permet, comme on le verra plus loin, le montage d'une plaque transparente 15 couvrant l'ouverture.

Dans l'exemple le second grand côté 16 du panneau 10 est séparé du grand côté adjacent 13 de l'ouverture 11 par une distance l' sensiblement supérieure à la distance l.

Les côtés 12 et 13 de l'ouverture 11 ont des prolongements 12', 13' jusqu'aux petits côtés 17, 18 du panneau 10. Ces prolongements forment les bords de gouttières à fonds, respectivement 19 et 20, en retrait par rapport au plan de façade 21. Ces gouttières 19, 20 sont destinées à supporter les extrémités, respectivement $19_1$ et $20_1$, de la plaque 15.

Le bord 12, dans le sens de l'épaisseur, est limité, d'un côté, par la façade 21 du panneau 10, et de l'autre côté, par un épaulement 22 (figure 2) s'arrêtant aux petits côtés 23, 24 de l'ouverture. De même le bord 13 est limité, dans le sens de l'épaisseur, d'un côté par la façade 21 et, de l'autre, par un épaulement 25 également limité par les petits côtés 23, 24.

La plaque 15 a la forme générale d'une bande rectangulaire de même longueur que les grands côtés 14, 16 du panneau 10 afin qu'après montage ses petits côtés $17_1$, $18_1$ soient alignés avec les petits côtés 17, 18 dudit panneau.

De l'un des grands côtés 30 de la plaque 15 est en saillie une nervure 31 se terminant par un bord courbe 32 ayant le même rayon de courbure R que le bord 12 de l'ouverture lorsqu'est exercée la traction F. Ainsi la nervure 31 présente une partie centrale plus haute que ses parties latérales.

L'épaisseur de cette nervure 31 n'est pas égale à l'épaisseur de la plaque 15. Cette nervure 31 est limitée, dans le sens de l'épaisseur, d'un côté, par le fond 33 (dont les extrémités sont destinées à reposer sur les fonds 19, 20 desdites gouttières bordant l'ouverture 11) et, de l'autre côté, par un plan 34 (figure 2) destiné à entrer en contact avec l'épaulement 22. Autrement dit l'épaisseur de la nervure 31 est égale à la distance séparant l'épaulement 22 des fonds 19 et 20.

La longueur de ladite nervure 31 est au maximum égale à celle du côté 12 de l'ouverture 11.

L'autre grand côté 36 de la plaque 15 est également bordé par une nervure 37 dont l'arête libre 38 est rectiligne et parallèle audit côté 36. Cette nervure 37 est ainsi limitée par deux épaulements 39, 40 séparés par une distance très légèrement inférieure à celle du grand côté 13 de l'ouverture 11.

La nervure 37 a une épaisseur moins importante que la plaque 15. Cette nervure est limitée, dans le sens de l'épaisseur, par le fond 33 et par un plan 41 destiné à entrer en contact avec l'épaulement 25 (figure 2). La distance entre les plans des faces 33 et 41 est ainsi pratiquement égale à la distance entre le fond 19 et l'épaulement 25.

Dans l'exemple la plaque 15 est transparente sur toute sa longueur mais le fond des extrémités $19_1$ et $20_1$ est recouvert d'une peinture opaque.

L'épaisseur totale de cette plaque 15 est pratiquement égale à la distance séparant la façade 21 des fonds 19, 20 des gouttières de manière, qu'après montage, le plan de la face supérieure de la plaque 15 soit pratiquement de niveau avec le plan de la façade 21.

Pour le montage on exerce sur la bande 14' entre les

0120768

5

côtés 12 et 14 une traction dans le sens de la flèche F à l'opposé de l'ouverture 11 afin que le côté 12 présente une courbure de rayon R avec sa concavité tournée vers l'ouverture, et on dispose la nervure 37 de la plaque 15 sous l'épaulement 25, la plaque 15 étant ainsi positionnée longitudinalement par la coopération des bords 39, 40 de ladite nervure 37 avec les bords 23, 24 de l'ouverture 11. Ensuite on fait reposer cette plaque 15 sur les fonds de gouttières 19, 20. Une fois la traction F relachée l'épaulement 22 s'applique contre la face 34 de la nervure 31.

Dans le sens longitudinal, la plaque 15 est ainsi bloquée par coopération des bords 39, 40 de la nervure 37 avec les bords 23, 24 de l'ouverture. Dans le sens de la largeur le blocage est assuré par coopération des grands côtés de la plaque 15 avec les bords 12, 12', 13, 13' et, dans le sens de l'épaisseur, la plaque est coincée entre les fonds 19, 20 de gouttières et les épaulements 22, 25 par coopération avec les faces latérales des nervures.

L'assemblage de la plaque 15 au panneau 10 est ainsi effectué sans collage et/ou sans pièce rapportée. Il est particulièrement simple à mettre en oeuvre pour la fabrication en grande série. En outre il ne compromet pas l'esthétique du panneau.

6

## REVENDICATIONS

1. Panneau (10) à ouverture (11) fermée par une plaque (15), notamment porte d'accès au réceptacle d'un lecteur-enregistreur de bandes magnétiques en cassettes, caractérisé en ce que la partie (14') dudit panneau bordant un premier côté (12) de l'ouverture (11) présente une élasticité telle que ce côté (12) puisse, sous l'effet d'une traction (F) sur ladite partie, être courbé avec sa concavité tournée vers l'ouverture, ce côté (12) étant en outre bordé par un épaulement (22), ou une rainure, en retrait par rapport à la façade (21) et qui est destiné à coopérer, pour la fixation de la plaque quand la traction a été relachée, avec une face (34) d'une nervure (31) en saillie d'un premier côté (30) de la plaque (15).

2. Panneau selon la revendication 1, caractérisé en ce que le bord libre (32) de la nervure (31) présente un rayon de courbure (R) sensiblement égal à celui du premier côté (12) de l'ouverture lorsque la traction (F) est exercée sur la partie élastique (14') du panneau (10).

3. Panneau selon la revendication 1 ou 2, caractérisé en ce que le côté (36) de la plaque (15) opposé au premier côté (30) présente une autre nervure (37) coopérant avec un épaulement (41), ou rainure, en retrait de la façade (21) bordant le côté correspondant (13) de l'ouverture (11).

4. Panneau selon la revendication 3, caractérisé en ce que la seconde nervure (37) est limitée longitudinalement par des bords (39, 40) coopérant avec des côtés correspondants (23, 24) de l'ouverture (11) pour le positionnement de la plaque (15).

5. Panneau selon l'une quelconque des revendications précédentes, caractérisé en ce que l'ouverture a une forme générale rectangulaire et deux de ses côtés parallèles (23, 24) sont bordés par des gouttières de réception des extrémités ($19_1$, $20_1$) de la plaque (15).

6. Panneau selon l'une quelconque des revendications précédentes, caractérisé en ce qu'il est en matière plastique.

7. Panneau selon l'une quelconque des revendications précédentes, caractérisé en ce que la plaque (15) est transparente.

1/1

FIG_1

FIG_2

FIG_3

FIG_4

**0120768**

Numéro de la demande

**RAPPORT DE RECHERCHE EUROPEENNE**

Office européen
des brevets

EP 84 40 0544

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 189 808 (SONY)<br>* Page 4, lignes 3-9; figures 1-4 * | 1,5,7 | G 11 B 15/66 |
| A | GB-A-2 009 482 (PHILIPS)<br>* Page 3, lignes 28-30; figures * | 1,5,7 | |
| A | CH-A- 614 885 (J.-P. DEVILLERS)<br>* Page 4; figures * | 1,3,5-7 | |
| A | GB-A-1 200 469 (J.B. GABRIELS)<br>* Page 2, lignes 97-120; page 3, lignes 49-61; figures * | 1,6,7 | |
| A | GB-A- 550 161 (J. FIDDES) | | **DOMAINES TECHNIQUES RECHERCHES (Int. Cl. ³)** |
| A | FR-A-2 133 207 (CIT-ALCATEL) | | G 11 B<br>B 65 D |
| A | US-A-3 704 841 (K.S. BROWN) | | |
| A | BE-A- 673 258 (STAAR) | | |
| A | DE-A-2 652 778 (OLYMPUS) | | |
| | --- -/- | | |

Le présent rapport de recherche a été établi pour toutes les revendications

| Lieu de la recherche<br>LA HAYE | Date d'achèvement de la recherche<br>18-06-1984 | Examinateur<br>DECLAT M.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

Office européen
des brevets

**RAPPORT DE RECHERCHE EUROPEENNE**

**0120768**
Numéro de la demande

EP 84 40 0544

| | DOCUMENTS CONSIDERES COMME PERTINENTS | | Page 2 |
|---|---|---|---|

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-3 741 565 (J. BREITLING) | | |
| | ----- | | |
| | | | **DOMAINES TECHNIQUES RECHERCHES (Int. Cl. ³)** |

Le présent rapport de recherche a été établi pour toutes les revendications

| Lieu de la recherche | Date d'achèvement de la recherche | Examinateur |
|---|---|---|
| LA HAYE | 18-06-1984 | DECLAT M.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82